# EUROPÄISCHE PATENTSCHRIFT

(11) **EP 1 170 272 B1**
(45) Veröffentlichungstag und Bekanntmachung des Hinweises auf die Patenterteilung: **16.04.2003**
(21) Anmeldenummer: 00114336.1
(22) Anmeldetag: 04.07.2000
(51) Int. Cl.: C05C 9/02

(54) **Verfahren zur Herstellung eines Düngemittelgranulates**
Process for producing fertilizer granules
Procédé de fabrication d'engrais granulés

(43) Veröffentlichungstag der Anmeldung: 09.01.2002
(73) Patentinhaber: Deliplant GmbH, 50171 Kerpen-Bergerhausen (DE)
(72) Erfinder:
(74) Vertreter: Wunderlich, Rainer, Dipl.-Ing.

(56) Entgegenhaltungen:
- EP-A- 0 071 128
- WO-A-94/15891
- CH-A- 598 155
- DE-A- 3 539 631
- DE-B- 1 129 460
- FR-A- 1 302 033
- FR-A- 1 356 105
- US-A- 4 025 329
- DATABASE WPI Section Ch, Week 199443 Derwent Publications Ltd., London, GB; Class C04, AN 1994-346984 XP002152939 & JP 06 271379 A (DOJO HOZEN KENKYUSHO YG) , 27. September 1994 (1994-09-27)

## Beschreibung

Die Erfindung betrifft ein Verfahren zur Herstellung eines Düngemittelgranulats mit Methylenharnstoff.

Die Herstellung von mineralischen Düngemitteln als Granulat ist im Stand der Technik hinlänglich bekannt. Gegenüber flüssigem oder feinpulvrigen Düngemitteln haben Düngemittelgranulate Vorteile hinsichtlich Transport, Lagerung und Handhabung. Granulate sind daher eine der gebräuchlichsten Anwendungsformen von Düngemitteln.

An die Herstellung von Düngemittelgranulaten werden verschiedene Anforderungen gestellt. Zum einen soll das Granulat möglichst formgenau herstellbar sein. Eine möglichst gleiche Größe stellt definierte, gleichmäßige Zerfallseigenschaften sicher, was für eine gezielte Nährstoffzuführung notwendig ist. Da zudem Überkorn die maschinelle Ausbringung des Düngemittels beeinträchtigen kann, muss dieses nach der Granulatherstellung vom Gutkorn getrennt und gegebenenfalls dem Produktionsprozess rückgeführt werden. Weiterhin wird eine gute Bindung innerhalb des Granulatkornes verlangt, um auch nach längerer Lagerung Staubverluste beim Ausbringen des Düngemittels zu vermeiden. Schließlich soll das Granulat leicht und damit wirtschaftlich herstellbar sein.

Im Stand der Technik ist es bekannt, bei der Granulatherstellung von Düngemittel mit Methylenharnstoff ein Bindemittel beizumengen. Diese Bindemittel haben aber in der Regel keine Nutzwirkung zur Nährstoffeinbringung und können unter Umweltgesichtspunkten eine Belastung darstellen. Die Verwendung von Bindemitteln ist daher aus ökonomischen und ökologischen Gründen nachteilig.

Weiterhin besteht das Problem, dass Methylenharnstoff keiner hohen thermischen Belastung ausgesetzt werden kann, da sich dieser leicht zersetzt und dabei Ammoniak freigesetzt werden kann.

Die FR 1 302 033 A offenbart ein Verfahren zur Herstellung eines Düngemittelgranulats mit Methylenharnstoff. Bei diesem Verfahren werden Harnstoff und Paraformaldehyd ohne Zugabe eines Lösungsmittels miteinander gemischt und auf eine Temperatur von 80 - 200 °C erwärmt, um zu Methylenharnstoff zu reagieren. Bei dem Mischen der beiden Ausgangsstoffe werden weitere Düngemittelkomponenten zugegeben, die bei der Kondensationsreaktion des Harnstoffs mit dem Paraformaldehyd nicht mitreagieren, jedoch gleichmäßig in dem entstehenden Methylenharnstoff eingebettet sind. Das Endprodukt wird anschließend granuliert.

Aus der JP 06 271379 A ist ein Verfahren zur Herstellung eines Düngemittelgranulates bekannt, bei dem ein Stickstoff freigebener Düngemittelgrundstoff, beispielsweise Harnstoff-Formaldehyd- kondensate, in einer geringen Menge Wasser unter Zugabe von Zeolith und einer Säure gemischt und zu einem Granulat geformt wird.

Die FR 1 356 105 offenbart ein Verfahren zur Herstellung granulierter Produkte, bei dem ein Harz auf Methylenharnstoffbasis in eine konzentrierte Lösung eines Harzes auf Methylenharnstoffbasis eingeleitet und mit diesem vermengt wird. Die entstehende Masse wird anschließend granuliert und durch pulverisiertes Harz benetzt.

Die Aufgabe wird erfindungsgemäß durch ein Verfahren nach dem Patentanspruch 1 gelöst. Bevorzugte Ausführungsformen der Erfindung sind in den abhängigen Ansprüchen angegeben.

Ausgehend von dem gattungsgemäßen Verfahren ist die Erfindung dadurch gekennzeichnet, dass der Methylenharnstoff in pulverförmigem Zustand zusammen mit weiteren Düngemittelkomponenten bei Umgebungstemperatur in einen Extruder eingeleitet wird, dass der Methylenharnstoff in dem Extruder erwärmt und Wasser zugesetzt wird, dass mit der Erwärmung die Löslichkeit des Methylenharnstoffs ansteigt und der Methylenharnstoff einen Zustand erreicht, bei dem dieser mit dem Wasser zu einer pasteusen, plastischen Masse verarbeitet wird, und dass vor einem Austrittsende des Extruders die plastische Masse abgekühlt und bei Austritt aus dem Extruder zu dem Granulat abgelängt wird.

Die Erfindung beruht auf der Erkenntnis, dass Methylenharnstoff bei einer erhöhten Temperatur stark wasserlöslich ist und mit. geringen Mengen Wasser eine pasteuse, plastische Masse bildet. Diese pasteuse, plastische Masse ist zur Extrusion hervorragend geeignet und kann zudem weitere pulverförmige Düngemittelkomponenten aufnehmen und einbinden. Bei einer Abkühlung dieser pasteusen, plastischen Masse auf Umgebungstemperatur, also eine Temperatur zwischen 5 bis 20°C, nimmt die Löslichkeit von Methylenharnstoff in Wasser stark ab, so dass ein ausreichend festes Granulat ohne aufwendige thermische Trocknung gebildet werden kann. Im Sinne der vorliegenden Patentanmeldung sind als Methylenharnstoff insbesondere Dimethylentriharnstoff, Trimethylentetraharnstoff, Tetramethylenpentaharnstoff und Pentamethylenhexaharnstoff sowie Mischungen hieraus zu verstehen.

Das erfindungsgemäße Verfahren bietet den Vorteil, dass ein Düngemittelgranulat ohne Bindemittel und eine wesentliche thermische Beanspruchung herstellbar ist. Der eingesetzte pulvrige Methylenharnstoff dient als eine Art Bindemittel, wobei dieses jedoch selbst von den Pflanzen als Nährstoff aufnehmbar ist. Der Zusatz anderer bzw. weiterer Bindemittel ist grundsätzlich nicht notwendig. Mit dem erfindungsgemäßen Verfahren können nichtstaubende und besonders abriebfeste Granulate mit Größen zwischen 0,2 bis 4 mm hergestellt werden, wobei diese Granulate unabhängig von deren Größe nahezu gleichbleibende gute Zerfallseigenschaften aufweisen. Das erfindungsgemäße Verfahren eignet sich somit insbesondere zur Verarbeitung von pulvrigen Düngemittelmischungen sogar mit Eisen II, welches bekanntlich sehr temperaturempfindlich ist. Des weiteren ist sogar eine Umarbeitung von fertigen Granulaten in kleinere oder größere Granulatgrößen ohne Veränderung des Nährstoffgehaltes möglich.

Erfindungsgemäß wird die plastische Masse vor dem Austrittsende des Extruders so gekühlt, dass das Extrudat vorzugsweise auf ca. 60 °C bei Austritt abgekühlt ist, und bei Austritt aus dem Extruder zu dem Granulat abgelängt. Zum Ablängen wird beispielsweise einem Formwerkzeug am Extruderaustritt ein Schneidwerkzeug zugeordnet, welches das austretende Extrudat ablängt. Grundsätzlich kann die Granulatbildung aber auch getrennt von dem Extruder in einer separaten Vorrichtung erfolgen.

Grundsätzlich kann ein Düngemittelgranulat mit bis zu 100 % Methylenharnstoff hergestellt werden. Ein besonders guter Zusammenhalt innerhalb des Granulatkornes wird erfindungsgemäß aber dadurch erreicht, dass die Masse aus 10 % bis 60 % Methylenharnstoff gebildet wird. Abhängig von der Eigenschaft weiterer Düngemittelkomponenten, die dem Methylenharnstoff zusätzlich beigemengt werden können, kann der geeignete Gehalt an Methylenharnstoff in einfacher Weise durch Versuche bestimmt werden.

Mit dem erfindungsgemäßem Verfahren können zusammen mit dem Methylenharnstoff beliebige weitere mineralische Salze sowie Spurenelemente und sogar organische Düngemittelkomponenten in gewissem Umfang mitverarbeitet werden.

Hinsichtlich der mineralischen Salze sind die Düngemittelkomponenten insbesondere aus der nachfolgend genannten Gruppe ausgewählt. Diese Gruppe besteht aus Ammoniumnitrat, Ammoniummolybdat, Ammoniumsulfat, Borsäure, Calciumnitrat, Cobaltsulfat, Colemanit, Dicalciumphosphat, Eisensulfat monohydrat, Eisensulfat heptahydrat, Eisen EDTA, Harnstoff, Kaliumnitrat, Kaliumsulfat, Kaliumhydrogenphosphat, Kieserit, Kobaldsulfat, Kupfer EDTA, Kupfersulfat, Magnesiumoxid, Magnesiumphosphat, Mangansulfat, Mangan EDTA, Monoammoniumphosphat, Natriummolybdat, Steinmehl, Zinksulfat und Zink EDTA.

Damit können N-, P- oder K-Düngemittel hergestellt werden. Erfindungsgemäß ist es bevorzugt, dass die mineralischen Salze zur Bildung eines NPK-Düngemittels ausgewählt werden.

Eine besonders schnelle und schonende Verfahrensdurchführung wird erfindungsgemäß dadurch erreicht, dass der Düngemittelgrundstoff in dem Extruder auf eine Temperatur zwischen 50°C und 120 °C, insbesondere zwischen 60 °C bis 80 °C, erwärmt wird. In diesem Temperaturbereich wird einerseits eine gute Löslichkeit des Methylenharnstoffes in Wasser erreicht, während andererseits die thermische Belastung zumindest bei einer Extruderdurchlaufzeit von unter zwei Minuten noch ausreichend gering ist. In dem genannten Temperaturbereich konnte in dieser Zeitspanne keine nennenswerte Veränderung des Methylenharnstoffes oder eine Oxidation des Eisen II zu Eisen III als weitere Komponente festgestellt werden.

Grundsätzlich kann das Verfahren auch unter Zugabe einer gewissen geringen Menge eines zusätzlichen Bindemittels durchgeführt werden. Im Vergleich zu bisherigen Verfahren kann aufgrund der erfindungsgemäßen Wirkung bei der Herstellung von Düngemittelgranulat die Zugabe solcher nicht zur Nährstoffversorgung dienenden Komponenten jedoch drastisch reduziert werden. Nach der Erfindung ist es jedoch. besonders vorteilhaft, dass die Verarbeitung zur plastischen Masse ohne Zugabe eines Bindemittels durchgeführt wird.

Eine bevorzugte Ausführung der Erfindung besteht darin, dass zur Herstellung der plastischen Masse 1 % bis 10 % Wasser, vorzugsweise 3 % bis 6 % Wasser zugesetzt wird. Ein derartiger Wasseranteil gewährleistet bei den angegebenen Temperaturbereichen einerseits eine ausreichende Löslichkeit und damit ein gutes Bilden der plastischen Masse, während andererseits nach Bildung des Granulates keine oder eine allenfalls sehr kurze thermische Trocknung notwendig ist. Dies ist sowohl hinsichtlich des Energieverbrauchses als auch zur Vermeidung einer thermischen Belastung der Düngemittelkomponenten vorteilhaft.

Es ist erfindungsgemäß, dass zum Bilden der plastischen Masse ein Mehrwellen-Extruder eingesetzt wird. Mit einem Extruder kann das gesamte Verfahren in einer einzelnen Vorrichtung durchgeführt werden. Dabei werden die einzelnen Düngemittelkomponenten in den Extruder zugeführt, dort vermischt und unter der mechanischen Bearbeitung oder zusätzlich durch Heizelemente erwärmt. Nach Zusetzung des Wassers wird durch Einwirkung vom Misch- und Knetextruder die plastische Masse gebildet und am Ausgang des Extruders durch ein Formwerkzeug entsprechend der gewünschten Granulatgröße unter gleichzeitiger Abkühlung ausextrudiert. Das Verfahren kann in einem Mehrwellen-Extruder mit insbesondere zwei kämmenden Extruderschnecken besonders schnell und damit schonend durchgeführt werden. Für einen gleichmäßigen Materialaustrag ist insbesondere ein gegenläufig angetriebener Doppelwellenextruder bevorzugt.

Zur Verbesserung der Abriebfestigkeit des Granulates ist es nach einer weiteren Ausführung der Erfindung vorgesehen, dass das Granulat rondiert wird. Hierzu kann eine hinlänglich bekannte Rondiermaschine verwendet werden.

Zur bevorzugten Durchführung des Verfahrens wird ein zweiwelliger Misch- und Knetextruder in Kombination mit einem Rondiergerät eingesetzt, welche nachfolgend beschrieben werden.

Der Extruder umfasst zwei nebeneinanderliegende, ineinandergreifende Schneckenwellen, die aus Schneckenbüchsen und Knetelementen verschiedener Steigung und Länge zusammengesetzt sind.
Sie streifen sich gegenseitig und das Gehäuse mit engem Spiel ab, wodurch zwangsläufig eine Selbstreinigung erreicht wird ohne tote Ecken im Schneckengrund oder über dem Sattel. Das System ist weitgehend unabhängig von der Reibung zwischen Produkt und Gehäusewandung, so dass es auch bei starker Unterfüllung noch einwandfrei arbeitet.

Mit den Knetelementen, die in Anordnung, Zahl, Steigungsrichtung und Versatzwinkel variiert werden können, lassen sich die für das jeweilige Verfahren notwendigen Effekte gezielt herbeiführen. Die freien Querschnitte verändern sich während einer Umdrehung im Verhältnis 5:3. Dabei wirken in und auf das Produkt Scherkräfte aus den Geschwindigkeitsgefällen und formverändernde Normalkräfte aus der Volumenänderung. Letztere zwingen das Produkt in die benachbarte Zone. Durch entsprechenden Versatz der Knetelemente wird der überwiegende Materialanteil axial stromabwärts gefördert oder in einem "Pilgerschritt" zurückgefördert. So werden Längsmischwirkungen, Energieeinleitung und Verweilzeitspektrum gezielt beeinflusst.

Die Extruderschnecken werden aus einzelnen, auf Wellen aufgezogene ein- und zweigängigen Schneckenbüchsen und Knetblöcken zusammengesetzt, so dass eine optimale Anpassung möglich ist, ebenso ein rascher auch partieller Austausch einzelner Elemente. Die Schneckenwellen sind zwischen Getriebe und Verfahrensteil gekuppelt, so dass sie abgezogen werden können.

Der Verfahrensteil ist aus einzelnen Gehäuseschüssen zusammengesetzt, wodurch eine individuelle Anpassung an die erforderliche Verfahrenslänge möglich ist. Bei verschleißenden oder korrosiven Produkten erhalten die Gehäuse leicht auswechselbare Büchsen aus entsprechenden Werkstoffen. Die Gehäuse besitzten Längsbohrungen für Umlauftemperierung durch Wärmeträger. Jeder Gehäuseschuss sowie die Schnekkenwellen können getrennt temperiert werden. Eine Wasserzuleitung kann an einer oder mehreren Stellen des Gehäuses erfolgen.

Die Entfernung flüchtiger Mischungsbestandteile ist über entsprechende Gehäuseöffnungen mit oder ohne Vakuum möglich. Die Abdichtung gegenüber den stromauf- und abwärtsgelegenen, benachbarten Zonen erfolgt durch das Produkt. Zur Erfassung von Mischguttemperaturen und Druck können in Gehäusebohrungen Fühler vorgesehen werden. Die Mischgutkomponenten werden entsprechend den technologischen Erfordernissen entweder volumetrisch oder gravimetrisch als Vormischung oder Einzelkomponenten in einen gemeinsamen Einlauf dosiert oder in Teilströmen an mehreren Stellen zugegeben. Das Produkt wird unter Druck axial mit direkter Verformung über angeflanschte Granuliervorrichtungen ausgetragen.

Anschließend wird das Granulat einem Rondiergerät zugeführt. Das Rondiergerät ist für den Chargenbetrieb zur Ausrundung von feucht extrudierten Produkten oder vorgeformter Extrudaten mit Durchmesser von 300 bis 3000 µm ausgelegt.

Im Rondiergerät werden vorgeformte Produkte in eine gleichmäßige, spiralbahnförmige Umwälzbewegung versetzt. Diese Bewegung wird durch die Überlagerung von Luftstrom-, Zentrifugal- bzw. Gravitationskräften erreicht.

In der Rollphase der Produkte nehmen die Reibungskräfte der Rotorscheibe und der Behälterwand Einfluss auf die Form des Produktes. Die Produkte werden durch die Einfüllstutzen auf die drehende Rotorscheibe aufgegeben. Die aus der Drehbewegung resultierende Zentrifugalkraft fördert das Produkt gegen die Behälterwand.

Die Rotation der Rotorscheibe, das nachdrängende Produkt und die vom seitlichen Luftspalt eintretende Luft erzeugen eine kreisende Produktbewegung an der Behälterwand. Nach einer Verweilzeit, die von der Drehzahl der Rotorscheibe und der Produktbeschaffenheit bestimmt wird, wird das Gerät über die Entleerklappe entleert. Zur Verlängerung der Verweilzeit können mehrere Rondiergeräte kaskadenartig übereinander installiert werden.

Bei einer versuchsweisen Durchführung des Verfahrens auf dem oben beschriebenen Extruder wurden folgende Ergebnisse ermittelt.

Mit steigender Gehäusetemperatur erhöht sich die Intensität der Plastifizierung, bis es bei zu hohen Temperaturen von weit über 100°C, etwa über 120°C, das Produkt zersetzt. Der Druck und die spezifische Energie sinken durch die von außen zugeführte Konvektionswärme, welche eine Viskositätserniedrigung der plastischen Masse bewirkt. Die Dichte bleibt nahezu konstant, wogegen die Temperatur bis zur Zersetzung ansteigt. Bei deutlich erhöhter Drehzahl auf 200 1/min lässt sich auch bei niedrigen Gehäusetemperaturen ein Produkt extrudieren, da bei gleicher Materialtemperatur und entsprechend kurzer Verweilzeit das Material sich nicht mehr zersetzt.

In den Versuchsreihen konnten Granulate der unterschiedlichsten Formulierung und Zusammensetzung hergestellt werden mit sehr guten Zerfallseigenschaften und einem Staubanteil von unter <0,2 %. Es hat sich weiter ergeben, dass ich durch die mechanische und thermische Behandlung keine Veränderung des Methylenharnstoffes und keine Oxidation des Eisen II zu Eisen III aufgetreten ist. Weiter wurde festgestellt, dass die Produktqualität gleichbleibend ist und die Granulate eine hohe Homogenität aufweisen. Es wird ermöglicht, die vom Anwender geforderten Qualitätsparameter wie hohe Festigkeit und ein nach der Ausbringung schneller Zerfall in einem Produkt zu vereinigen.

Bei diesen extrudierten Düngemitteln wurde neben der großen Festigkeit, der guten Transport- und Lagerfähigkeit auch ein rascher Zerfall nachgewiesen.

Aufgrund von Recherchen in anderen Produktionsbereichen wurde festgestellt, dass ein Vorteil gegenüber anderen Verfahren darin besteht, dass der Extruder flexibler, schneller und mit einem geringeren Restvolumen im Prozess betrieben werden kann. Durch den Gutkornanteil, der bei 90 bis 98% liegt, fallen nur geringe Mengen an, die in den Prozess zurückgeführt werden können.

In bisherigen Verfahren wurden aufgrund der chemischen und physikalischen Eigenschaften Düngemittel extrudiert, deren Rohstoffe erhebliche Mengen Binde- oder Plastifizierungsmittel zugesetzt wurden. Da es sich hierbei nicht um Nährstoffträger handelt, ist das Spektrum der Formulierung eingeschränkt. Bei erfindungsgemäß hergestellten Düngemitteln ist dies nicht notwendig. Vielmehr hat Methylenharnstoff einen besonders hohen Stickstoffanteil.

## Patentansprüche

1. Verfahren zur Herstellung eines Düngemittelgranulates mit Methylenharnstoff, bei dem der Methylenharnstoff in pulverförmigen Zustand mit mindestens einer weiteren Düngemittelkomponente zu einer Masse vermischt wird, welche zu Granulat verarbeitet wird,
**dadurch gekennzeichnet,**
- **dass** der pulverförmige Methylenharnstoff und die weitere Düngemittelkomponenten bei Umgebungstemperatur in einen Extruder eingeleitet werden,
- **dass** der Methylenharnstoff in dem Extruder erwärmt und Wasser zugesetzt wird,
- **dass** mit der Erwärmung die Löslichkeit des Methylenharnstoffs definiert erhöht und der Methylenharnstoff auf einen Zustand eingestellt wird, bei dem dieser mit dem Wasser und der weiteren Düngemittelkomponente zu einer pasteusen, plastischen Masse verarbeitet wird, und
- **dass** vor einem Austrittsende des Extruders die plastische Masse abgekühlt und bei Austritt aus dem Extruder zu dem Granulat abgelängt wird.

2. Verfahren nach Anspruch 1,
**dadurch gekennzeichnet,**
**dass** die Masse aus 10 bis 60 % Methylenharnstoff gebildet wird.

3. Verfahren nach Anspruch 1,
**dadurch gekennzeichnet,**
**dass** als weitere Düngemittelkomponenten mineralische Salze, insbesondere zur Bildung eines NPK-Düngemittels, zugesetzt werden.

4. Verfahren nach einem der Ansprüche 1 bis 3,
**dadurch gekennzeichnet,**
**dass** der Methylenharnstoff bzw. der Düngemittelgrundstoff in dem Extruder auf eine Temperatur zwischen 50 °C und 120 °C, insbesonbesondere zwischen 60 °C bis 80 °C, erwärmt wird.

5. Verfahren nach einem der Ansprüche 1 bis 4,
**dadurch gekennzeichnet,**
**dass** die Verarbeitung zur plastischen Masse ohne Zugabe eines Bindemittels durchgeführt wird.

6. Verfahren nach einem der Ansprüche 1 bis 5,
**dadurch gekennzeichnet,**
**dass** zur Herstellung der plastischen Masse 1 % bis 10% Wasser, vorzugsweies 3 % bis 6 % Wasser, zugesetzt wird.

7. Verfahren nach einem der Ansprüche 1 bis 6,
**dadurch gekennzeichnet,**
**dass** zum Bilden der plastischen Masse ein Mehrwellen-Extruder eingesetzt wird.

8. Verfahren nach einem der Ansprüche 1 bis 7,
**dadurch gekennzeichnet,**
**dass** Granulat rondiert wird.

## Claims

1. Process for the production of a granular fertilizer material with methylene urea, in which the methylene urea in the pulverulent state is mixed with at least one further fertilizer component to form a mass, which is processed to granular material,
**characterized in that**
- the pulverulent methylene urea and a further fertilizer component are introduced into an extruder at ambient temperature,
- the methylene urea is heated in the extruder and water is added,
- with the heating the solubility of the methylene urea is increased in a defined manner and the methylene urea is adjusted to a state where it is processed with water and the further fertilizer component to a pasty, plastic mass and
- upstream of the extruder discharge end, the plastic mass is cooled and on passing out of the extruder is cut up to form the granular material.

2. Process according to claim 1,
**characterized in that**
the mass is formed from 10 to 60% methylene urea.

3. Process according to claim 1,
**characterized in that**
as further fertilizer components mineral salts are added, particularly for forming a NPK fertilizer.

4. Process according to one of the claims 1 to 3,
**characterized in that**
the methylene urea or fertilizer base material is heated in the extruder to a temperature between 50 and 120øC, particularly between 60 and 80øC.

5. Process according to one of the claims 1 to 4,
**characterized in that**
processing to the plastic mass takes place without adding a binder.

6. Process according to one of the claims 1 to 5,
**characterized in that**
for producing the plastic mass 1 to 10%, preferably 3 to 6% water is added.

7. Process according to one of the claims 1 to 6,
**characterized in that**
a multi-shaft extruder is used for forming the plastic mass.

8. Process according to one of the claims 1 to 7,
**characterized in that**
the granular material is rounded.

## Revendications

1. Procédé de fabrication de granulés d'engrais avec du méthylène-urée, selon lequel on mélange du méthylène-urée à l'état pulvérulent à au moins un autre composant d'engrais pour former une masse donnant des granulés,
**caractérisé en ce qu'**
- on met le méthylène-urée à l'état de poudre et les autres composants de l'engrais, à température ambiante dans une extrudeuse,
- on chauffe le méthylène-urée dans l'extrudeuse et on ajoute de l'eau,
- la solubilité du méthylène-urée augmente de manière définie avec l'élévation de température et on règle le méthylène-urée dans un état pour lequel celui-ci sera traité avec l'eau et les autres composants de l'engrais pour former une masse plastique pâteuse, et
- avant l'extrémité de sortie de l'extrudeuse, on refroidit la masse plastique et à la sortie de l'extrudeuse, on coupe à longueur les granulés.

2. Procédé selon la revendication 1,
**caractérisé en ce que**
la masse est formée de 10-60 % de méthylène-urée.

3. Procédé selon la revendication 1,
**caractérisé en ce que**
comme autre composant de l'engrais, on utilise des sels minéraux notamment pour former un engrais NPK.

4. Procédé selon l'une des revendications 1 à 3,
**caractérisé en ce qu'**
on chauffe le méthylène-urée ou la matière de base de l'engrais dans l'extrudeuse à température comprise entre 50°C et 120°C notamment entre 60°C et 80°C.

5. Procédé selon l'une des revendications 1 à 4,
**caractérisé en ce qu'**
on traite pour obtenir une matière plastique sans ajouter de liant.

6. Procédé selon l'une des revendications 1 à 5,
**caractérisé en ce que**
pour fabriquer la masse plastique on ajoute entre 1 % et 10 % d'eau et de préférence entre 3 % et 6 % d'eau.

7. Procédé selon l'une des revendications 1 à 6,
**caractérisé en ce que**
pour former la masse plastique, on utilise une extrudeuse à plusieurs arbres.

8. Procédé selon l'une des revendications 1 à 7,
**caractérisé en ce qu'**
on arrondit les granulés.
